# EUROPEAN PATENT APPLICATION

(11) **EP 4 280 170 A1**
(43) Date of publication of application: **22.11.2023**
(21) Application number: 22174310.7
(22) Date of filing: 19.05.2022
(51) Int. Cl.: G06V 10/25, G06V 20/10, A01B 79/00, A01D 91/00

(54) **METHOD AND SYSTEM FOR GRAIN MOISTURE MEASUREMENT**

(71) Applicant: Yara International ASA, 0277 Oslo (NO)
(72) Inventor: Jörg, Jasper, 48249 Dülmen (DE)
(74) Representative: AWA Sweden AB

(57) **Abstract**

The current disclosure relates to a system and method for determining a crop grain moisture level of a crop in an agricultural field and measurement region for the determination thereof comprising receiving field data and determining the crop grain moisture level based on the field data. Alternatively, a measurement region for carrying out the measurements is determined based on field data, based on which a crop grain moisture level is determined, or based on a measurement location, a crop grain moisture level is determined based on said location and field data. Optional approaches include the use of remote imagery for further improvements of the current method.

## Description

### Technical field

The present disclosure relates to the determination of a crop grain moisture level and suitable measurement regions for measurements which allow the determination thereof. The present disclosure further relates as well to the determination of a harvesting window based on said crop grain moisture level.

### Background

Determining an optimum harvesting time is of critical importance for the farmers. Moisture content is critical at harvest, but as well through further downstream phases like storage and to the final sale of the grain, seed or pulses.

If the moisture is too high, the farmers may need to dry the crops before storage, otherwise when grains, seeds or pulses are stored too moist, mould and pests can appear. If the moisture is too low, the harvest might suffer splitting or cracking, as well as a decrease in quality. Moreover, if crops are harvested too wet, the weight that relates to the excessive moisture content is being deducted and not paid for to the farmer, this causing further losses over the value chain. If the crops are harvested in a too dry status, this will reduce the weight of the sold produce and with that the revenue of the farmers.

While modern complex combine harvesters and other agricultural machines provide moisture readings, a low-cost approach is needed which guides the farmers for a suitable determination of the crop grain moisture level and a precise harvesting time window for harvesting the crop. Despite the wide availability of remote solutions, remote sensing capabilities are not a good indicator of crop grain moisture levels. Different model-based approaches aiming at the modeling of crop maturity usually need calibration for different crops and locations and require a long development time. A low-cost approach is therefore needed which enables local sensing by means of handheld devices which takes into account the in-field variability of a crop grain moisture level.

### Prior Art

Handheld devices for direct measurement of crop grain moistures are well known in the prior art. Some of these devices usually determine the moisture by means of resistive, capacitive and/or optical detection methods. For example, the device disclosed in US2003/025513 A1 enables the farmers to carry out on-site measurements of the grains at the agricultural field.

However, in-field variability of crop moisture and crop maturity or senescence degree make it cumbersome to determine an overall value of the crop grain moisture and/or the amount of measurements needed to have a reliable moisture determination over the whole crop by means of direct measurement.

Remote determination of crop moisture level does not provide a representative value of the crop grain moisture. Leaves form the top portion of the plant that receives direct solar radiation and are visible to satellite sensing platforms, leave moisture is however not directly related to the grain moisture and therefore usual approaches for determining a crop moisture are not suitable for estimation of a grain or pulse moisture of said crop. Other known approaches include a model-based approach aim at determining an evolution of the crop maturity level. An example of such an approach can be found in US2021/110157 A1. These approaches need calibration for different locations and crops and are however silent about determining a measurement region for a crop grain moisture determination.

### Summary

The current disclosure aims at providing solutions for the problems which the use of such handheld measurement devices or remote approaches entail and to provide an improved method which allows the user to determine a crop grain moisture level.

According to a first aspect of the present disclosure, this and other objectives are achieved by a(n at least partly) computer implemented method for determining at least one measurement region for a grain or pulses moisture measurement device for determining a crop grain moisture level in an agricultural field, wherein the method comprises determining an agricultural field, receiving field data from the agricultural field and determining at least one measurement region in the agricultural field for a grain or pulses moisture measurement device for determining a crop grain moisture level, wherein the at least one measurement regions is determined based on the field data.

Following this approach, the users are able of determining a crop grain moisture level of an agricultural field in an appropriately suitable location, allowing the determination of a relevant value of the crop grain moisture level.

According to a second aspect of the present disclosure, the method further comprises receiving remote image data of the agricultural field, processing the remote image data to obtain a crop and/or soil status, determining the at least one measurement region further based on the obtained crop and/or soil status.

Following this approach, crop and soil data not available to the users can be obtained, improving the determination of the measurement regions.

According to a third aspect of the present disclosure, determining at least one measurement region comprises determining at least one first and at least one second measurement region.

Following this approach, a reliable range of the crop grain moisture level can be determined.

According to a fourth aspect of the present disclosure, determining at least one measurement region further comprises determining the areas with most delayed senescence and determining the at least one measurement region based on the areas with most delayed senescence.

Following this approach, a lower threshold for the crop grain moisture level can be determined.

According to a further aspect of the present disclosure, determining at least one measurement region further comprises determining the areas with earliest senescence and determining the at least one measurement region based on the areas with the earliest senescence.

Following this approach, a higher threshold for the crop grain moisture level can be determined.

According to a further aspect of the present disclosure, determining the region with the most delayed or earliest senescence comprises receiving historic remote image data and processing the historic remote image data to determine the areas of most delayed or earliest senescence.

Following this approach, the specific areas can be determined in late stages of the crop maturity.

According to a further aspect of the present disclosure, the method further includes receiving at least one measurement of the crop grain or pulses moisture in at least one of the measurement regions and determining at least one of an expected average, maximum and minimum crop grain moisture level of the crop based on the at least one received measurement.

Following this approach, a reliable crop grain moisture level of the crop is effectively determined.

According to a further aspect of the present disclosure, the method further includes determining an expected harvesting window based on the at least one of the determined expected average, maximum and/or minimum crop grain moisture level.

Following this approach, the users can schedule a harvesting operation within a suitable time.

According to a further aspect of the present disclosure, determining an expected harvesting window further comprises receiving weather forecast data, determining a harvesting date based on the crop grain moisture level and the weather forecast data.

Following this approach, within the harvesting window, a specific date is determined denoting a limit date.

According to a further aspect of the present disclosure, the method further comprises scheduling a harvesting operation based on the expected harvesting window or the harvesting date.

Following this approach, the users can automatically request contracting the harvesting service at an advanced point in time.

According to a further aspect of the present disclosure, the method further comprises performing the harvesting operation by means of an agricultural apparatus (for example harvesting machinery).

According to an alternative solution of the present disclosure, this and other objectives are achieved by a(n at least partly) computer implemented method for determining a crop grain moisture level in an agricultural field, wherein the method comprises determining an agricultural field; receiving field data from the agricultural field; receiving at least one measurement of the crop grain moisture in a location of the agricultural field; determining the crop grain moisture level in the agricultural field based on the at least one measurement, the measurement location and the field data.

Following this approach, the users have the flexibility of determining their own suitable location while achieving a reliable value of the crop grain moisture level.

According to a further aspect of the present disclosure, the method further comprises receiving remote image data of the agricultural field; determining the crop grain moisture level in the agricultural field further based on the remote image data.

Following this approach, the crop grain moisture can be determined according to data unavailable to the users.

According to a further aspect of the present disclosure, determining a crop grain moisture level in an agricultural field further comprises receiving historic remote image data, processing the historic remote image data to determine the senescence degree of the measurement location, further determining the crop grain moisture level based on the senescence degree of the measurement location.

Following this approach, the crop maturity degree can be computed at advance stages in the senescence process.

According to a further aspect of the present disclosure, the method further comprises determining at least one of an expected average, maximum and minimum crop grain moisture level of the crop.

Following this approach, the users are able of determining allowable limits of the crop grain moisture level.

According to a further aspect of the present disclosure, the method further includes determining an expected harvesting window based on the at least one of the determined expected average, maximum and/or minimum crop grain moisture level.

Following this approach, the users can schedule a harvesting operation within a suitable time.

According to a further aspect of the present disclosure, determining an expected harvesting window further comprises receiving weather forecast data; determining a harvesting date based on the crop grain moisture level and the weather forecast data.

Following this approach, within the harvesting window, a specific date is determined denoting a limit date.

According to a further aspect of the present disclosure, the method further comprises scheduling a harvesting operation based on the expected harvesting window or the harvesting date.

Following this approach, the users can automatically request the servicing operation.

According to a further aspect of the present disclosure, the method further comprises performing the harvesting operation by means of an agricultural apparatus/harvesting machinery.

According to further aspects of the current disclosure, a system, a data processing apparatus, a computer-readable storage medium, and a computer program product configured to carry out the above discussed methods are envisaged.

According to further aspects of the current disclosure, the system further comprises a display and an input unit, wherein the system further comprises a Graphical User Interface configured to display the at least one measurement region.

According to further aspects of the current disclosure, the graphical user interface is further configured to display a plurality of the determined measurement regions and is further configured to receive an input for selecting at least one from the plurality of measurement regions displayed;

According to further aspects of the current disclosure, the system is further configured to receive farm data and display at least one scheduled task, wherein the system is further configured to display the at least one measurement region, and different itineraries which include the at least one measurement region and at least one of the scheduled tasks displayed.

According to further aspects of the current disclosure, the system is further configured to receive an input for determining at least one predetermined area of the agricultural field and the system is further configured to determine the at least one measuring region within the at least one predetermined area.

### Brief description of the figures

The accompanying drawings, which are included to provide a further understanding of the present disclosure and are incorporated in and constitute a part of this specification, illustrate embodiments of the disclosure and together with the description serve to explain the principles of the disclosure.
Figure 1 shows a system according to an embodiment of the present disclosure.
Figure 2 shows a crop grain or pulses moisture measurement device according to an embodiment of the present disclosure.
Figure 3 shows a representation of vegetation index values in the agricultural field according to one embodiment of the present disclosure.
Figures 4a to 4c show further representations of the vegetation index values according to other embodiments of the present disclosure.
Figures 5a and 5b show different representations of the Graphical User Interface according to other embodiments of the present disclosure
Figures 6a to 6c show further representations of the Graphical User Interface according to other embodiments of the present disclosure.
Figures 7 and 8 show workflows of the alternative methods according to the main embodiment of the present disclosure.

The accompanying drawings are used to help easily understand the technical idea of the present disclosure and it should be understood that the idea of the present disclosure is not limited by the accompanying drawings. The idea of the present disclosure should be construed to extend to any alterations, equivalents and substitutes besides the accompanying drawings.

### Detailed Description

The terms "comprising", "comprises" and "comprised of" as used herein are synonymous with "including", "includes" or "containing", "contains", and are inclusive or open-ended and do not exclude additional, non-recited members, elements or method steps. It will be appreciated that the terms "comprising", "comprises" and "comprised of" as used herein comprise the terms "consisting of", "consists" and "consists of".

The recitation of numerical ranges by endpoints includes all numbers and fractions subsumed within the respective ranges, as well as the recited endpoints.

The term "about" or "approximately" as used herein when referring to a measurable value such as a parameter, an amount, a temporal duration, and the like, is meant to encompass variations of +/-10% or less, specifically +/-5% or less, more specifically +/-1% or less, and still more specifically +/-0.1% or less of and from the specified value, insofar such variations are appropriate to perform in the disclosed application. It is to be understood that the value to which the modifier "about" or "approximately" refers is itself also specifically disclosed.

Whereas the terms "one or more" or "at least one", such as one or more or at least one member(s) of a group of members, is clear per se, by means of further exemplification, the term encompasses inter alia a reference to any one of said members, or to any two or more of said members, such as, e.g., any ≥3, ≥4, ≥5, ≥6 or ≥7 etc. of said members, and up to all said members.

All references cited in the present specification are hereby incorporated by reference in their entirety. In particular, the teachings of all references herein specifically referred to are incorporated by reference.

Unless otherwise defined, all terms used in disclosing the application, including technical and scientific terms, have the meaning as commonly understood by one of ordinary skill in the art to which this application belongs. By means of further guidance, term definitions are included to better appreciate the teaching of the present application.

In the following passages, different aspects of the application are defined in more detail. Each aspect so defined may be combined with any other aspect or aspects unless clearly indicated to the contrary. In particular, any feature indicated as being preferred or advantageous may be combined with any other feature or features indicated as being preferred or advantageous.

Reference throughout this specification to "one embodiment" or "an embodiment" means that a particular feature, structure or characteristic described in connection with the embodiment is included in at least one embodiment of the present application. Thus, appearances of the phrases "in one embodiment" or "in an embodiment" in various places throughout this specification are not necessarily all referring to the same embodiment but may. Furthermore, the particular features, structures or characteristics may be combined in any suitable manner, as would be apparent to a person skilled in the art from this disclosure, in one or more embodiments. Furthermore, while some embodiments described herein include some but not other features included in other embodiments, combinations of features of different embodiments are meant to be within the scope of the application, and form different embodiments, as would be understood by those in the art. For example, in the appended claims, any of the claimed embodiments can be used in any combination.

In the present description of the application, reference is made to the accompanying drawings that form a part hereof, and in which are shown by way of illustration only of specific embodiments in which the application may be practiced. Parenthesized or emboldened reference numerals affixed to respective elements merely exemplify the elements by way of example, with which it is not intended to limit the respective elements. It is to be understood that other embodiments may be utilised and structural or logical changes may be made without departing from the scope of the present application. The following detailed description, therefore, is not to be taken in a limiting sense, and the scope of the present application is defined by the appended claims.

The term "crop" generally refers herein to any plant grown to be harvested or used for any economic purpose.

In the present description, the term "pulses" or "grains" refers to any kind of seeds of cereals, leguminous and other plants which are collected and separated from the crop rests for food, feed or further processing for human consumption or any economic purpose. Examples which do not constitute any possible limitation to the scope of the present disclosure comprise crops where the seeds are being harvested for any economic purpose like cereals (wheat barley, oats, rye, triticale, rice, millet, sorghums), maize, pulses (peas, beans, soybeans, lentils, lupins), pseudocereals (buckwheat, chia, amaranth, quinoa,...) and others (e.g. oilseed rape, canola, grass and linen seeds, etc.).

In the present description "crop senescence" or "crop maturity" refers to the process of aging in plants. When crops or plants reach a certain age chlorophyl degradation occurs and this changes the usual green color of plants to yellow, red or darker tones. Determining these changes, whether relative to the disclosed vegetation index or coefficient or the colors of the crop are indicative of a senescence or maturity degree as used within the scope of the present disclosure.

In the present description, field data may include: identification data (for example, acreage, field name, field identifiers, geographic and topographic identifiers, boundary identifiers, crop identifiers, and any other suitable data that may be used to identify farm land), soil data (for example, type, composition, pH, organic matter (OM), cation exchange capacity (CEC)), planting data (for example, planting date, seed(s) type, relative maturity (RM) of planted seed(s), seed population), harvest data (for example, crop type, crop variety, crop rotation, whether the crop is grown organically, harvest date, expected yield, yield, crop price, crop revenue, tillage practice, and previous growing season information), fertilizer data (for example, nutrient type (Nitrogen, Phosphorous, Potassium), application type, application date, amount, source), pesticide data (for example, pesticide, herbicide, fungicide, other substance or mixture of substances intended for use as a plant regulator, defoliant, or desiccant) and/or irrigation data (for example, application date, amount, source) of present and past seasons.

In the present description, farm data may comprise further data regarding to planned or scheduled and past tasks like field maintenance practices and agricultural practices, fertilizer application data, pesticide application data, irrigation data and other field reports as well as historic series of the data from the farm/administrative side, related to administrative details in opposition to field data related to these topics, wherein the imprint in the field is meant for that. Amongst usual data related to this fields are, for example, managing stocks, manpower, available or utilized machinery and so forth, allowing the comparison of the data with past data, and further administrative data like work shifts, logs and other organizational data. Planned and past tasks may comprise activities like surveillance of plants and pests, application of pesticides, fungicides or crop nutrition products, measurements of at least one farm or field parameter, maintenance and repair of ground hardware and other similar activities.

External data may comprise weather data (for example, precipitation, temperature, wind, forecast, pressure, visibility, clouds, heat index, sun hours and radiance, dew point, humidity), or data from any other external sensors 170 or weather stations 180.

In the present description, "receiving remote image data" may comprise any kind of imagery of the agricultural field obtained by means of cameras or image capturing devices. These image capturing devices may be aerial sensors from satellites or other aerial vehicles, but can be as well mounted on tractors or be stationary, as long as a full coverage of the agricultural field or most of it over the required time span is achieved. Further, in the current disclosure, receiving data may comprise capturing the images but the teachings of the current disclosure comprise as well accessing said data existing from other platforms by means of known network communications or the access of servers or repositories wherein the remote image data may be stored.

In the present description "remote spectral data" refers to imaging data as defined above, wherein the imaging data comprises data of a plurality of spectral bands or optical domains of different wavelengths. Non-limiting examples of remote spectral sensing technologies include synthetic aperture (SA) and synthetic aperture radar (SAR), multi-spectral instrument (MSI) or any similar technologies. Amongst the different remote spectral data available for use, different public platforms like LANDSAT, SENTINEL and/or private providers are available to the public.

Remote data is usually pre-processed following standard procedures like normalization, removal of clouds, smoothing and the like which are comprised within the usual practices in the field and included within the scope of the present disclosure.

In the present description "a coefficient indicative of a crop and/or soil status" refers to any coefficient or index indicative of agricultural, soil and/or vegetation information. For example, several indexes have been used widely like the normalized difference vegetation index (NDVI), the soil-adjusted vegetation index (SAVI), the Soil Water Index (SWI) and/or the Bare Soil Index (BSI) and the present disclosure is not limited to a specific coefficient or index.

In the present description, an "agronomic recommendation engine" refers to any computer system or data server architecture configured to generate, access or process any of the data mentioned above. The agronomic recommendation engine following the description of the current disclosure may be an internal or external system, but it may as well be embedded in any agricultural vehicle or machinery. The agronomic recommendation engine may be configured to host, use or execute one or more computer programs or any other software elements or digitally programmed logic to perform the necessary analysis, processing, visualization steps of the current disclosure.

In the present description, a "Graphical User Interface" refers to any computer implemented representation of an interface for allowing the users to operate with an electronic device as comprised within the system of the current disclosure.

In the main embodiment of the present disclosure, the method for determining at least one measurement region 1000 for determining a crop grain moisture level comprises the steps of determining an agricultural field 2000 comprising a crop for which the moisture level determination is intended. Determining an agricultural field 2000 may comprise the farmers selecting a predetermined agricultural field within their farms by means of input unit 140 or it might be automatically determined based on farm data, field data and/or weather data or based on the farmers location data as provided by the location unit 150. As it will become apparent, the current system may determine a measurement region for a plurality of fields.

The method further comprises receiving field data 3000 from the agricultural field by means of the communication unit 120.

Receiving field data 3000 may comprise receiving boundary identifiers of the agricultural field. For example, regions proximate to the agricultural field boundaries are usually not good descriptors of the general average status of the crop within the inner areas of the agricultural field and remote spectral data relating to said boundary areas is of noisier nature and therefore not representative and those areas should be avoided.

Receiving field data may comprise receiving topographic data of the agricultural field. For example, regions within the agricultural field with a higher elevation tend to suffer more from water stress, accelerating the senescence process compared to regions with a lower elevation, where water usually gets concentrated by means of gravity.

Receiving field data may comprise receiving soil data of the agricultural field. For example, sandy soils present a lower water holding capacity, accelerating herewith the senescence process. Hence, based on the water holding capacity of the corresponding soil, regions where the crop has suffered an increased water stress during the senescence process can be determined.

Receiving field data may comprise receiving management zones of the agricultural field where crops with different planting/growing parameters have been planted. For example, based on the plant density, water stress can be increased compared to regions where the plant density is lower. This approach is not limited to the above-mentioned cases and can include the processing of other field data when available to the agricultural recommendation engine 210 or to the farmers, who may input this data by means of the input unit 140.

The method further comprises determining at least one measurement region based on the field data 4000. This step will typically be performed by the system 100, in particular using the processor or processing unit 160. As discussed above, predetermined regions within the field which may have suffered an increased or decreased water stress may be selected according to the present disclosure based on field data, thereby determining suitable regions which indicate boundary levels for the crop moisture, hereby providing a reliable value for the crop grain moisture level.

In an embodiment, the method of the current disclosure further comprises receiving remote image data of the agricultural field and determining the at least one measurement region based on the received remote image data. High resolution image data can be used in order to determine crop density, which as explained above can be used in order to determine measurement regions according to the previous embodiment of the current disclosure.

In a further embodiment, the method further comprises receiving remote spectral data and processing the remote spectral data to obtain a coefficient indicative of a crop and/or soil status and further determining at least one measurement region based on the coefficient. For example, based on remote spectral data, analogously as above, field data which might not be available for the user in some cases may be determined by means of the suitable processing of the remote spectral data. For example, in an embodiment, obtaining a coefficient may be related to determining soil water holding capacity, hereby providing these insights when field data may not have this data available.

In a further embodiment, processing the remote spectral data to obtain a coefficient indicative of a crop status may comprise determining the areas with earliest or most delayed senescence amongst which, or based on, the at least one measurement region may be selected.

In this embodiment, different scenarios are presented. When the farmers aim at determining a crop grain moisture level for harvesting purposes, usually the fields are in a final crop senescence or crop maturity status. However, the farmer may be interested in determining such a crop grain moisture level when the whole crop has not yet achieved a uniform status, but in order to check the evolution of the process.

Hence, in this later case, receiving remote spectral data and processing a suitable coefficient or vegetation index, regions which present a delayed senescence can be computed in real time, if said data is available, or by means of the most recent remote imagery data. For example, a representative vegetation index like the NDVI, which is closely related to the chlorophyll content of the plants, decays rapidly during the senescence process. Moreover, visible spectrum imagery is as well highly descriptive during this time span. Hence, during these earlier stages of the senescence process, RGB images are highly descriptive of color changes in the crop and as well of relevance for the current disclosure.

In a further embodiment, remote image data may as well be processed such that areas of earliest or most delayed senescence are determined. Following the determination of said areas, the method is further configured to determine the at least one measurement region based on the determined areas. In this embodiment, the method of the current disclosure is configured to determine based on image processing of the received remote image data, whether by means of RGB- or HSV-color spaces or any similar representation, the aeras of the most delayed or earliest senescence according to predetermined RGB- or HSV-color values which match the specific crop changes at said early stages. For example, most cereal crops abandon their usual green color at the beginning of their senescence process. Hence, determining said areas may comprise analyzing the color values of the remote image data in the predetermined color spaces and determining the areas with a value within a predetermined range denoting the specific crop colors at the different crop stages, being these specific crop colors available from the specific crops within the agricultural field as present in the field data.

In the embodiment wherein the method of the current disclosure is configured to determine these changes based on remote spectral data, the method of the current disclosure is further configured to process the remote spectral data in order to determine a coefficient or vegetation index indicative of the crop senescence, and, based on this coefficient, determine the areas of most delayed or earliest senescence according to the maximum or minimum values of said coefficient within the remote spectral data.

However, at advanced stages in the senescence process, crops usually tend to have a uniform color and crop moisture and therefore a further step must be taken to determine the relevant areas.

In a further embodiment, determining the areas with the most or earliest senescence comprises receiving historic remote image data and processing the historic remote image data, wherein the method may be configured to process remote image data in the visible color spectrum or by means of remote spectral data as explained above. Analogously, remote image data or remote spectral data is processed as above and based on it, the method is configured to determine the at least one measurement region

In this embodiment, the method is further configured to determine the area within the field where the color in one embodiment changes first into the predetermined set of color values as specified by the crop type, or the vegetation index or coefficient first rises in value over a predetermined threshold according to the respective embodiment, denoting that the determined area was the last area to reach the final stages in the senescence process, and is therefore determined as the area with most delayed senescence. Analogously, when following back in time, the last area within the field going through the above-mentioned color change or wherein the vegetation index or coefficient rises in value over the predetermined threshold is determined as the area with earliest senescence.

In a further embodiment, the method is configured to iteratively receive historic remote spectral data from the dates prior to when the method is configured to determine the regions and evaluate them iteratively, according to their date of capture, until the remote spectral data of the date is suitable for the determination. As it will become apparent from the figures, the method of the current disclosure comprises receiving historic remote image data prior to the moment when the users intend to carry out the measurements in the advanced senescence stages. As such, if the users intend to carry out the measurements in a given time, e.g. t1, the method comprises receiving historic remote image data prior to this time, t1, reaching a time t2 in which at least one first area can be determined as the area with most delayed senescence, and further receiving historic remote image data until a specific time, t3, in which at least one first area can be determined as the area of earliest senescence. While this times have been numbered as consecutive, it is clear that in between the specific times, further historic remote image data has been received and analyzed starting at t1 in order to determine those specific dates which allow the determination of the areas with earliest or most delayed senescence, wherein t3 < t2 < t1, i.e. t3 relates to an earlier moment in time in the crop season, t2 relates to a later time than t3 but earlier than t1.

While the determination of those first or last areas which undergo the specific phase denoting the loss of chlorophyll is clear from the paragraphs above, in between these phases, in-field variability of the crop status may need further consideration which address the specifics of an optimization problem in a non-strictly convex scenario. When using historic remote spectral data, due to the in-field variability of the vegetation indexes throughout the field, the location of local minima/maxima can be computationally intensive. In a further embodiment, in order to accelerate the processing of the remote spectral data for the determination of the measurement regions, the method is configured to analyze the standard deviation of the vegetation index or coefficient in the agricultural field when iteratively receiving remote spectral data from the dates prior to the execution of the current method embodiments. The standard deviation of said suitable vegetation indexes can be expected to be minimum over the whole agricultural field during the advanced senescence phases and therefore increase when going backwards in time to then plateau around a specific, a priori unknown value, when reaching the phase prior to full maturity. As such, the method of the current disclosure may further comprise analyzing the standard deviation of the vegetation index or coefficient within the field, iteratively, starting from the dates closest to the execution date (t1) of the current method embodiments, in order to determine the specific dates at which the suitable set of remote spectral data occur which best denote the predetermined senescence phases as explained above, hereby accelerating the processing of the remote spectral data. As such, the method of the current disclosure further comprises processing the historic remote spectral data to determine the suitable coefficient or vegetation index in between said specific dates t1 and the, a priori unknown t2, while the standard deviation of the coefficient or vegetation index is below a predetermined threshold.

In the current embodiment, the method further comprises determining the standard deviation of the respective remote spectral data for the agricultural field for each date received prior to the date of execution of the current method, wherein the method is configured to determine a specific date (t2) wherein the standard deviation reaches a certain threshold, before determining the measurement regions based on said coefficient on said date.

In a further embodiment, the method further comprises determining a further specific date wherein the standard deviation drops below a certain threshold which can be set in relation to the previous threshold and/or in an absolute manner, in order to determine the date t3 in which the areas of earliest senescence can be determined, before determining the measurement regions based on said areas.

In a further embodiment, the method is configured to receive at least one measurement of the crop grain or pulses moisture in at least one of the measurement regions. The method may be further configured to determine at least one of an expected average, maximum and minimum crop grain moisture level. Within this embodiment and throughout the disclosure, receiving at least one measurement may comprise carrying out a measurement with a device suitable for carrying out said measurements as explained above within the predetermined measurement regions. Receiving at least one measurement may further comprise receiving data from a measurement carried out by a third-party or contracting service, wherein receiving said data may comprise receiving the data over any network suitable for it, by means of wired or wireless communication networks. The measurement action and transmission over dedicated networks need not be simultaneous and can be effected within a predetermined time. For example, remote fields are not always communicatively connected by means of mobile or other suitable networks. Hence, the method may comprise carrying out a measurement and transmitting the data for reception at a posterior stage.

By receiving at least one measurement of the crop grain or pulses moisture, a crop grain or pulses moisture value can be determined. Based on this moisture value, and dependent on the location where the measurement may be carried out, a crop moisture level can be determined, wherein a crop moisture level may include different ranges and/or boundary values which determine the crop moisture values over the whole field of the crop.

In this embodiment, the method comprises determining at least one of an expected average, maximum and minimum crop grain moisture level based on the determined measurement and the measurement region as determined according to the respective embodiments above. For example, when receiving a measurement that the crop grain moisture in a region of most delayed senescence is 18%, this value would be determined as the maximum crop grain moisture of the crop. Contrarily, if the grain moisture measurement received was taken at a region with an earliest senescence, the value of said measurement is determined as the minimum value for the crop grain moisture level. Based on these values and taking into consideration the standard deviation of the vegetation index or coefficient over the field, a reliable average can be determined as well.

Further, other parameters derived from the respectively suitable vegetation indexes can be used for evaluation of the possible crop grain moisture level. For example, if the soil type can be remotely assessed from the remote spectral data by means of the respective vegetation indexes, this information can be introduced for calibration of the expected average, maximum and/or minimum crop grain moisture levels.

In a further embodiment, the method further comprises determining an expected harvesting window based on the at least one of the determined expected average, maximum and minimum crop grain moisture level.

When faced with the problem of scheduling a harvesting operation, farmers are confronted with the uncertainty of the harvesting date. Usually, farmers may not own the harvesting machinery and have to book service providers or rent the harvesting machinery themselves. In any of these cases, being able to determine early enough an expected harvesting date reduces cost and helps preparing the operations.

In a further embodiment, the method comprising determining an expected harvesting window further comprises receiving weather forecast data and further determining an expected harvesting date based on the crop grain moisture level and the weather forecast data. For example, based on the daily temperature evolution, the evolution of the crop grain moisture content can be adjusted until at least one of the expected average, maximum and minimum crop grain moisture level is within a certain threshold of predetermined values suitable for the specific crop.

These values may be determined based on user input or automatically by means of field data. Different crops require different levels of moisture at harvesting. Moreover, these values are highly dependent on annual crop and weather conditions For example, for a given location and specific weather conditions, corn might be best harvested at levels between 22 and 25% moisture content, wheat between 14 and 20%, rice between 20 and 25%. These values are however not limiting and can be adapted according to the crop type, location of the agricultural field and/or weather conditions. Hence, these first predetermined values, set as a specific values dependent on the crop type, weather and/or location conditions can be set as respective maximum and minimum crop grain moisture levels for the determination of the expected harvesting date. Further, if rain is detected to be forecast for a specific date, determining the harvesting date to happen before that date may be beneficial if at least one of the expected average, maximum and minimum crop grain moisture level is within a certain threshold of second predetermined values. The farmers, in view of this information, may prefer to harvest and store dry the crop rather than waiting for the crop/fields to dry out from the rain periods.

In a further embodiment, the method further comprises scheduling a harvesting operation based on the expected harvesting window or harvesting date.

Once the expected harvesting date has been determined, the method may further comprise scheduling a harvesting operation based on the expected date. Such a scheduling may comprise sending over the communication unit a request to service providers or with an internal/external booking system for the allocation of agricultural machines.

According to an alternative solution to the problems addressed by the current disclosure, another approach might be taken to provide further advantages to the users. While determining a specific region wherein the at least one measurement is to be conducted has the advantage of choosing the best possible areas in order to determine the crop grain moisture values, allowing the users to, independently from the locations used for the measurement of the crop grain moisture, achieve representative and reliable values for the crop grain moisture levels enables the users or farmers to choose the best possible actions within the harvesting process.

In this alternative main embodiment, the method for determining a crop grain moisture level 5000 in an agricultural field of the present disclosure comprises determining the agricultural field 6000 in which the crop is comprised, for which the measurement is intended to be carried over. As previously, the determination of the agricultural field may be based on the users input or on field or farm data, as well as on the current location of the farmers as indicated for the embodiments above. According to this embodiment, the method further comprises receiving field data 7000 from the agricultural field and receiving at least one measurement of the crop grain moisture at a location within the agricultural field. The field data may for example be received by means of the communication unit 120. Following these steps, the method further comprises determining the crop grain moisture level of the crop present in the agricultural field based on the at least one measurement, the measurement location and the field data 8000. This step 8000 may be performed by/using a processor or processing unit, such as the processor or processing unit 160.

As disclosed in the previous embodiments, based on the different field data of the agricultural field, the crop grain moisture value can be determined relative to the specific values of different field data values. For example, if the users have carried out the measurements at a location where the crop density is minimum with respect to the rest of the field, and based on topographic data, the measurement location is place in regions with the lowest elevation, the crop grain moisture measurement is determined to be within a predetermined threshold of the lower limit of the crop grain moisture level. Different values of the delivered crop grain moisture levels may be interpolated based on one and/or more of these parameters.

In a further embodiment, the method further comprises receiving remote image data, which as above may further comprise remote spectral data. Analogously to the approach disclosed above, the crop grain moisture level may be determined based on the areas with most delayed and/or earliest senescence. As discussed above, the approach may differ depending on the stage of senescence within the crop achieved at the moment of carrying out the measurements. At early stages, when areas of earliest and/or most delayed senescence can be determined within the agricultural field, based on the remote image data, the method of the current disclosure may be configured to determine the relative senescence degree of the location at which the measurements have been carried out by means of interpolation or regression techniques, such that the measured crop grain moisture can be determined to be within a predetermined threshold of a crop grain moisture level, For example, if as discussed above, remote spectral data is used and at the date of carrying out the measurement, the coefficient or vegetation index of the location at which the measurement was carried out is determined to be within the upper quartile of the senescence progress within the field, the crop grain moisture level can be determined such that the crop grain measurement value at the specific location is determined to be within the upper quartile of the distribution of the crop grain level of the crop as a whole. Said distribution may be adjusted based on the standard deviation of the coefficient or vegetation index values over the whole field and/or further values of the field data such that a reliable range for the crop grain moisture values can be achieved, and at least one of a crop grain moisture average, minimum and/or maximum can be determined.

In the embodiment in which the measurement is to be carried out at the later stages of senescence, the method of the current disclosure may further comprise as above receiving remote image data as explained above. In this case, the relative crop senescence degree may be achieved from a single observation at a specific date of the remote image data as explained in this latest embodiment, or may as well be determined once at least one of the areas with earliest and/or more delayed senescence are determined as above for the previous alternative embodiments in which the method is configured to receive remote image data from a plurality of dates in order to specifically determine the areas with earliest and/or most delayed senescence.

Once the relative crop senescence degree of the location at which the measurement has been carried out, the crop grain moisture values can be determined as above, by means of interpolation or regression techniques.

It is included within the scope of the present disclosure to determine the crop grain moisture levels within an agricultural field by combining one or more of the discussed embodiments. For example, based on the relative crop senescence degree as determined from remote image data, together with an specific crop density as received from field data or determined from remote image data, the crop grain moisture values can be adjusted correspondingly, thereby achieving a more accurate determination of the crop grain moisture values.

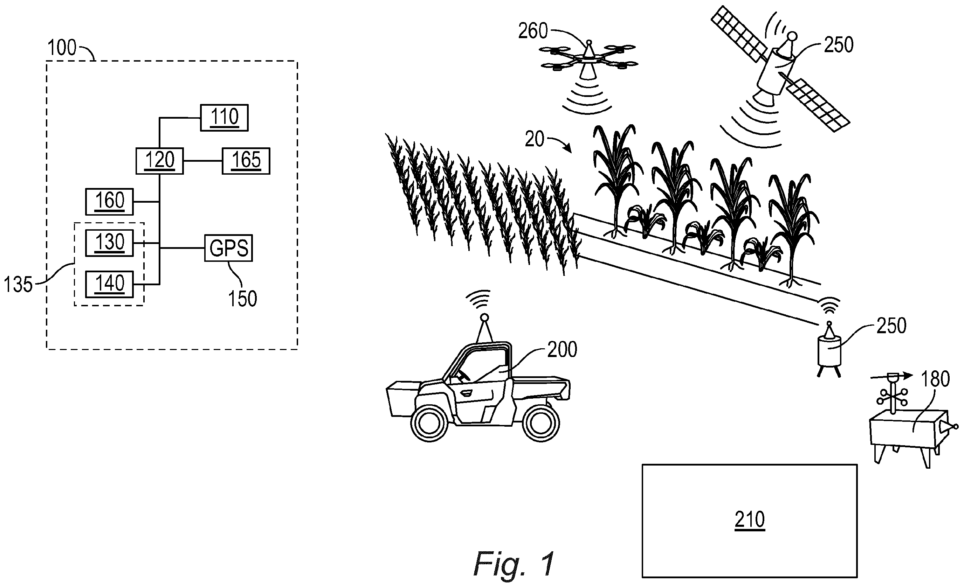

Figure 1 depicts a schematic representation of a system according to the main embodiment of the present disclosure as well as a representation of an agricultural field 20 where the present disclosure has its field of operation.

System 100 comprises a crop grain or pulses moisture measurement device 110. System 100 comprises a communication unit 120 and a processor or processing unit 160 and a memory unit 165, an output unit 130 and an input unit 140.

System 100 may be represented by an electronic device with an integrated crop grain or pulses moisture measurement device comprising all elements of the system 100 but may be as well represented by a separate crop grain or pulses moisture measurement with either part or all processing units needed for the determination of the crop grain moisture, wherein the device is communicatively connected by means of a further communication unit with an electronic device comprising, alternatively, either part or all processing units and the required communication units for the system. For example, system 100 may be an autonomous electronic device with integrated input and output units. As represented in the following figures, system 100 may comprise the measurement device and an electronic device in the form of a smartphone, table or the like. The measurement device and the electronic device may be communicatively connected by means of usual wired or wireless connections.

A crop grain or pulses moisture measurement device 110 as defined in the present disclosure is not limited to one singular detecting principle. Said devices are based on different electrical (resistive, capacitive), optical or other means, all of which are comprised within the scope of the present disclosure. Said devices usually comprise a chamber 112 in which a predetermined number of grains or pulses 10 can be introduced. This chamber 112 can be put under pressure by means of a closing element with a threaded bolt 113 when using usual electric sensing approaches where a certain compaction of the crop grains or pulses sample or leave the sampled number of grains or pulses unpressurized but isolated from outside light depending on the detecting principle.

Crop grain or pulses moisture measurement device 110 as defined in the present disclosure is then able of determining a moisture content of the sample and output it by means of the communication unit and/or directly to the users by means of output unit 130. Moisture contents may be usually expressed in % related to the weight of the water present divided by the total mass. However, any measurement scale can be considered within the scope of the present disclosure.

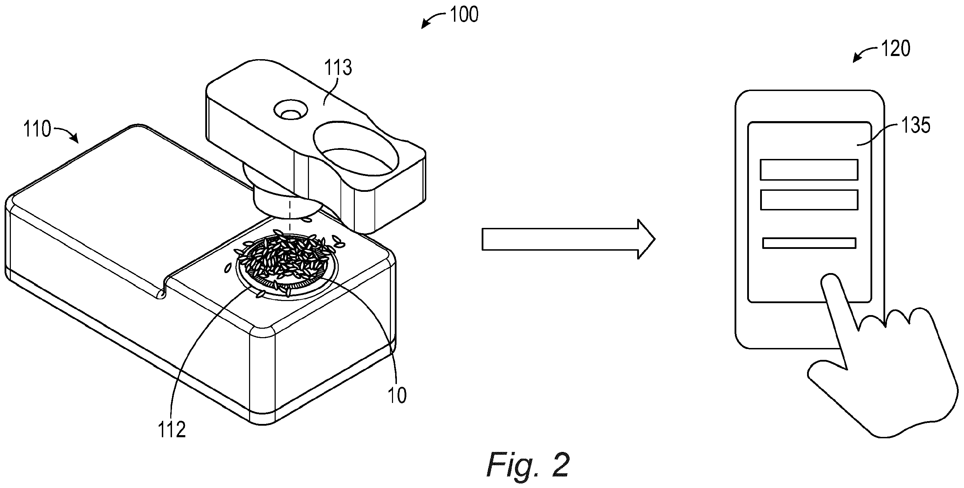

Figure 2 depicts an exemplary embodiment of a crop grain or pulses moisture measurement device according to one embodiment of the present disclosure. Since the method of the current disclosure is not limited to one specific sensing technology or type of crop grain or pulses moisture measurement device, no specifics of the device will be discussed herein.

The crop grain or pulses moisture measurement device of Figure 2 comprises a sensing chamber 112 with at least partly threaded walls, closed up by a cover element with a threaded bolt 113, wherein the cover element may comprise a lever-shaped or rigid extension to support the farmers in applying the necessary pressure for tightening the grains or pulses in the sensing chamber. In this depicted case, the crop grain or pulses moisture measurement device 110 is based on the resistivity properties of the grains or pulses as a function of the moisture, but may as well be based on the capacitive properties.

In Figure 2 a representation of the measuring step is as well provided. Once the grains or pulses have been introduced in the sensing chamber and after screwing in the cover element, the crop grain or pulses moisture measurement device is ready to start the measurement procedure.

In the embodiment of Figure 2, such a measurement procedure may be started by means of user action on a dedicated Graphical User Interface of the electronic device or by means of an input unit 140 of the crop grain moisture measurement device 110. Next, the case in which a dedicated Graphical User Interface is used is described. In this case, system 100 may be formed by an individual measurement device 110 and an electronic device comprising the communication unit 120, as well as a display unit 130 and an input unit 140, which may be combined in the form of a touch sensitive display 135, as well as a system location unit 150, processor 160 and memory unit 165. In this embodiment, crop grain or pulses measurement device may be operatively connected to the electronic device by means of a suitable wired or wireless connection, wherein both the measurement device and the electronic device may comprise therefore a further suitable communication unit or communication port (Bluetooth^{®}, USB or the like).

System 100 is then configured to deliver a crop grain or pulses moisture content of the grain introduced in the sensing chamber. System 100 may be further configured to store the values of the measurement with the associated location, as provided by means of the location unit 150.

Although depicted in here as a separate device, system 100 may be an electronic device with an integrated measurement device together with the communication unit 120. As such, the farmers may, by means of a specific input and/or output unit, directly operate the crop grain or pulses measurement device, which would then comprise all remaining elements of system 100 like the display unit 130 and input unit 140 as well as the system location unit 150, processor 160 and memory unit 165.

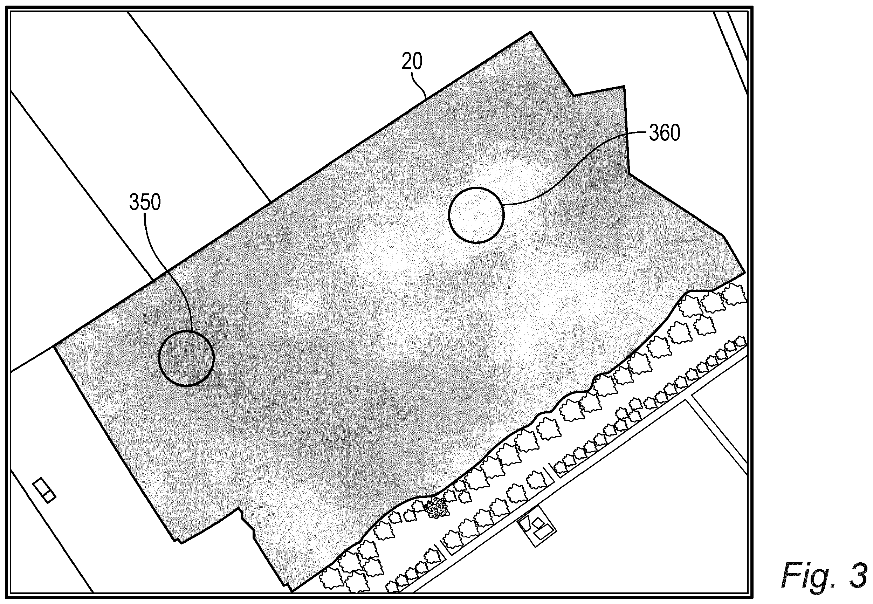

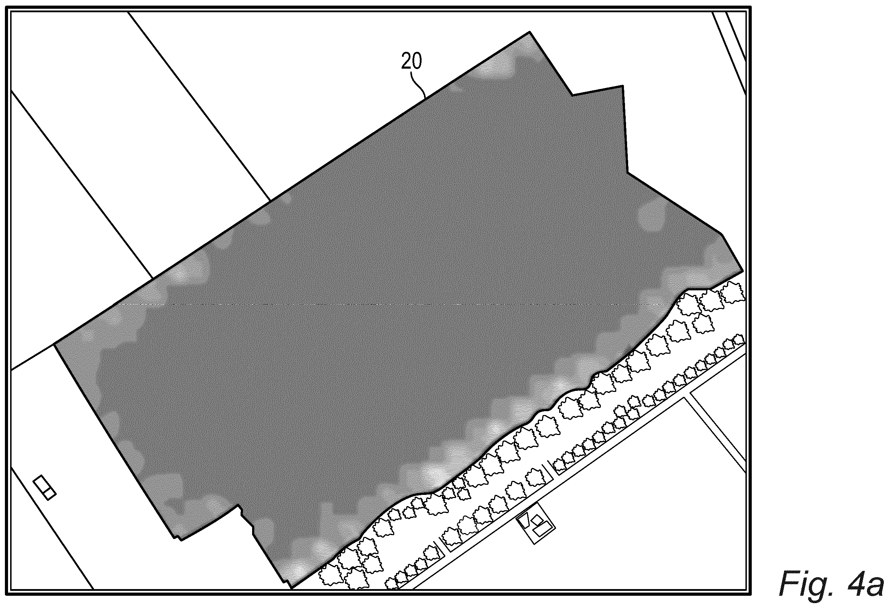

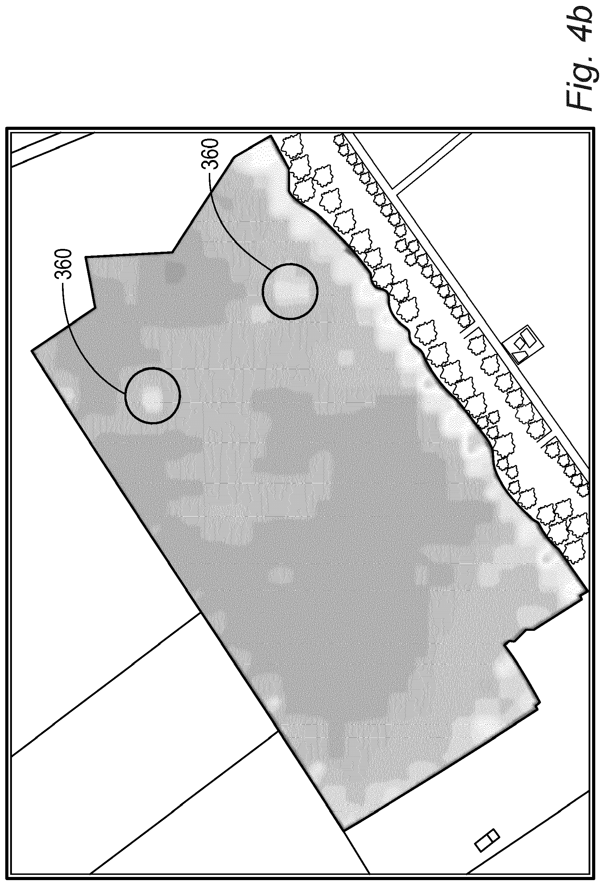

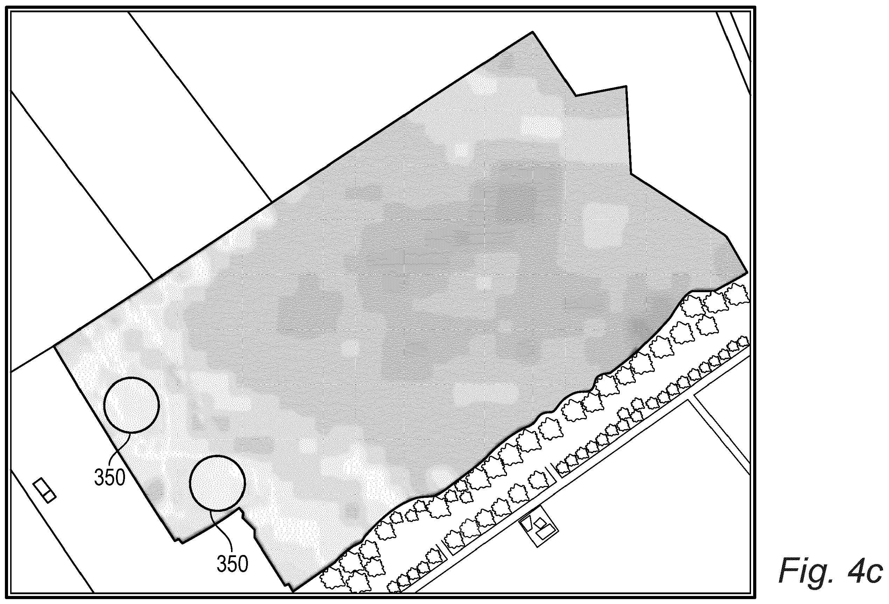

Figure 3 shows an example of the coefficient values generated from the remote spectral data in the agricultural field at the earlier stages of the crop senescence process, following one embodiment of the present disclosure. Figure 3 shows an agricultural field wherein some of the areas have entered the final stages of the senescence process, wherein the crop in these areas represent the areas of earliest senescence 350, while some other areas are still said earlier phases, wherein these areas represent the areas with most delayed senescence 360, as shown in Figure 3, wherein the most delayed senescence areas 360 are given by the light(er) color areas and the areas with the earliest senescence 350 are given by the dark(er) color areas. In figures 4a-c, however, due to the grey conversion this relation is not maintained. In Figures 4b and 4c different original colors are however turned into same kinds of grey, therefore rendering the drawings slightly confusing. These drawings are only considered for explanation and cannot be considered to be limiting. Still, although both the areas with earliest senescence 350 and most delayed senescence 360 are represented with the lighter grey color, they actually do not refer to the same color. In Figure 4b, the lighter areas refer to a light yellow area in the original colored pictures which reflect the most delayed senescence areas 360. In figure 4c, however, the lighter areas refer to light green areas representing the areas with earlier senescence.

Figures 4a to 4c show another example of the coefficient values generated from the remote spectral data in the agricultural field following another embodiment of the present disclosure. In this embodiment, when the farmers are bound to measure the crop grain moisture content at advanced stages of the crop senescence process, the coefficient values in the field may not give any especially relevant information since the crop in the whole agricultural field 20 has a uniform status and no specific determination of the crop maturity status can be carried out, as it is to be seen in Figure 4a.

In this embodiment, the method further comprises receiving historic remote spectral data, wherein Figures 4b and 4c show such said data at the suitable dates following the specific embodiments of the current disclosure. As mentioned above, Figure 4a shows the values of generated coefficient from the remote spectral data at the supposed time of execution of the method according to the current embodiment, t₁. Figure 4b shows the values of the same coefficient at an earlier point in time t₂ and Figure 4c at an earlier point t₃, wherein t₃ < t₂ < t₁, i.e. t₃ relates to an earlier moment in time in the crop season, t₂ relates to a later time than t₃ but earlier than t₁, and t₁ relates to the time when the method of the current disclosure is carried out following the disclosure of the current embodiment.

As mentioned above, in this embodiment, the method is configured to iteratively receive historic remote spectral data from the dates prior to t₁. Upon reception of the remote spectral data for times tᵢ s.t. tᵢ ∈ (t₂, t₁), the method further comprises determining the respective vegetation index or coefficient. Following the disclosure of the present embodiment, the method comprises determining the area within the field where the vegetation index or coefficient first rises in value over a predetermined threshold, denoting that that area was the last area to reach the final stages in the senescence process, and is therefore determined as the area with most delayed senescence 360, in which case said point in time is denoted as t₂. Analogously, when following back in time, the last area within the field wherein the vegetation index or coefficient rises in value over the predetermined threshold is determined as the area with earliest senescence 350, see Figure 4c.

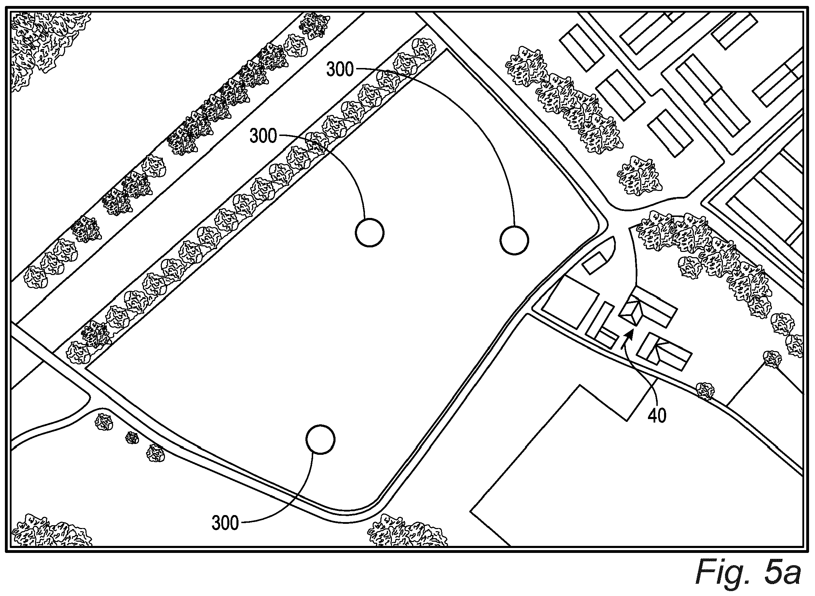

Figure 5a shows a Graphical User Interface according to one embodiment of the present disclosure in which the remote spectral data is received. However, while the system 100 is of a mobile nature, the Graphical User Interface envisaged for the current system might be as well run on a laptop or desktop electronic device at the farm in preparation of the daily activities. Hence, the scope of the application for the current Graphical User Interface is not only limited to mobile devices. Throughout the disclosure, the system being configured to display is meant to be by means of a dedicated Graphical User Interface displayed by means of the display unit.

The farmers, when planning to carry out the at least one measurement, may first select at least one field from a plurality of fields belonging to his farm. The fields may comprise crops of the same or different type. In this embodiment, the agricultural field is displayed upon selection and the figure represents the at least one measurement region as determined following the above disclosed embodiments.

The users may, upon display of the agricultural field select at least a part or sub-part of the agricultural field where they are intending to be or is convenient for them to pass by or in order to check specific spots in the field which may be needed to inspect.

System 100 is configured to, by means of the Graphical User Interface, display at least one measurement region 300 within the agricultural field wherein the crop grain or pulses measurements shall be effectuated according to the different embodiments of the current disclosure.

System 100, when displaying the at least one field may further display the location 40 of the farmers if in the view. System 100 may further display by means of the Graphical User Interface, when the farmer is not on the displayed view due to scale or to the actual position of the farmer, an icon 40 representative of the relative location of the farmers.

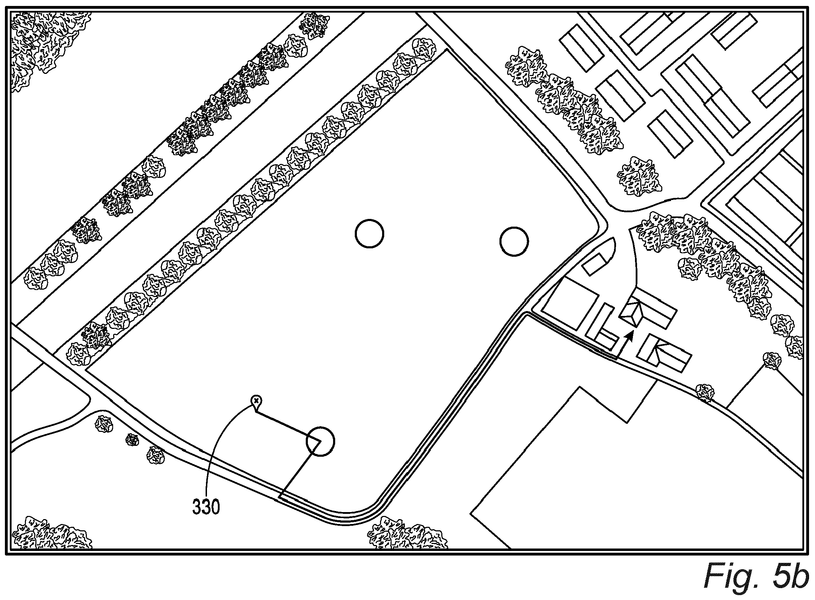

System 100, when displaying the at least one measurement region 300 within the field, may display several of these regions which are suitable for carrying out the measurements. The displayed measurement regions 300 may represent a measurement region representing an area with earliest or with most delayed senescence according to the above shown embodiments. System 100 may further display scheduled tasks 330, received from the available farm data, within the field, providing the user with further information for choosing the most convenient measurement region amongst the ones determined by the system 100. System 100, when displaying scheduled tasks 330, as represented in Figure 5b, may further display an icon representative of the task to be carried out, as well as any further data which might be related to the task (appointment with external actors, scheduled time, completion details of the task) for further planning. The system 100 may be further configured to display in the Graphical User Interface further field, farm and/or weather data which are related to the scheduled tasks. As such, the farmers may schedule both the measurement action, as well as the intended agricultural practice in a time optimal manner which integrates in the daily activities of the field without disrupting any of the scheduled tasks. For example, if a task is scheduled at a given time and cannot be shifted due to a fixed appointment with an external advisor or actor, the system of the current disclosure may be configured to determine the measurement region, the needed itineraries in between different regions and scheduled tasks, and the scheduling of the subsequent tasks to be carried out on the determined field.

For example, the system of the current disclosure may be configured to display alternative routes 305 and measurement regions 300 which link the scheduled tasks 330, offering the user different itineraries which include, at least a measurement region determined to any of the above above-mentioned embodiments, and at least one of the scheduled tasks 330. As such, the farmers can choose from the proposed measurement regions, if more than one available, having weather and farm data into consideration, allowing the farmers to schedule accordingly their day, while achieving the determination of at least one suitable measurement region to carry out the measurements.

In a further embodiment, the system may be further configured to receive an input which selects at least one of the scheduled tasks. Based on the location of the scheduled tasks selected, the system may be further configured to determine at least a measurement region which is suitably located to establish an itinerary which includes the at least one measurement region and the selected scheduled tasks.

In a further embodiment, where the method of the current disclosure is configured to determine a sub-area within the agricultural field where the measurement region should be contained, the Graphical User Interface may further be configured to receive an input from the users, whereby the users are able of determining at least one predetermined area or sub-area of the agricultural field where the system is configured to determine the at least one measuring region. The system may be configured, by means of the Graphical User Interface, to allow the users to draw or create by means of a lasso selection tool the at least one predetermined area or sub-area. Following this embodiment, the users are allowed to determine specific areas within the agricultural field where they are going to be, or pass through, or which are more convenient for them due to the presence of scheduled tasks or further tasks the farmers should carry out in the agricultural field.

In a further embodiment, the method of the current disclosure is configured to determine the at least one measurement region based on the distance to at least a first and/or at least one second predetermined location.

In a further embodiment, the at least one first and/or the at least one second predetermined locations are at least one of the following: a position within a tramline track on the agricultural field , a boundary region of the agricultural field, the position of the farmer, the position of a sensor in the agricultural field, the position of a scheduled task on the agricultural field, a previous sampling position on the agricultural field, and an entrance gate to the agricultural field.

The advantages of said embodiments will be made clear ahead. Usually, geographical barriers or the lack of existence of specific connections within specific areas of fields or between different fields may render cumbersome for the farmers to move from specific regions of the farms and/or agricultural fields to other specific regions. For example, certain agricultural fields are fenced and have a unique point of entry. As such, certain areas can be prioritized by determining a distance from the entry gate to the at least one measurement region. Other agricultural fields which lack said unique point of entry may be referred to their boundaries for establishing the reference distances. While crop status at the boundary may lead to inaccuracies due to the problematics associated with them (lack of appropriate fertilization due to strict local regulations, insufficient information from remote sensing due to the boundaries) and the nearest regions to them should be avoided, it is always of convenience for the farmers to determine a measurement region which is easily accessible from one field boundary. As such, the method may be configured to determine the suitable at least one first and at least one second measurement regions which are as close as possible to any of the boundaries while maintaining a minimum distance from them.

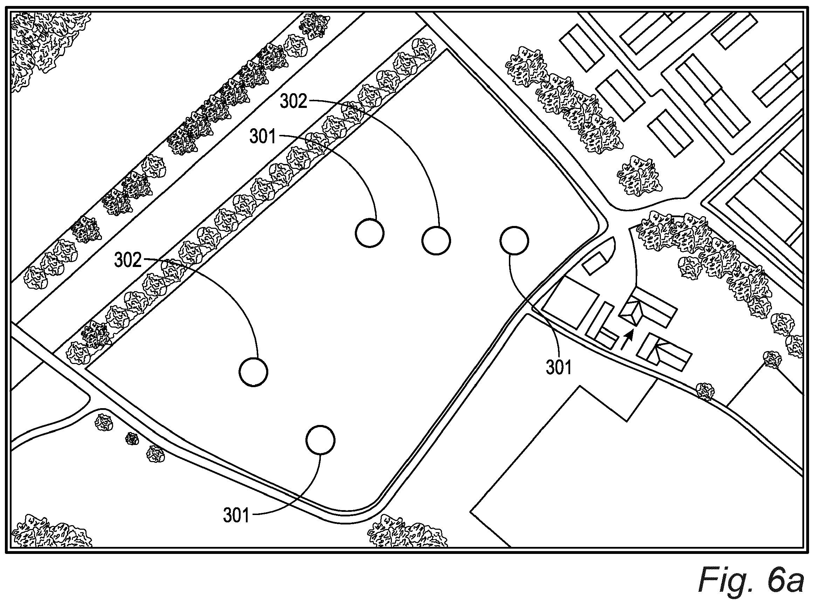

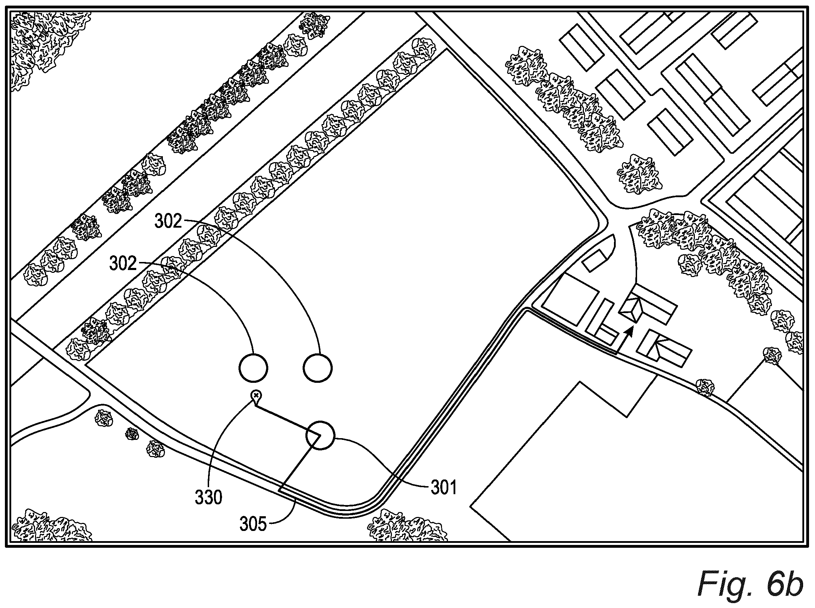

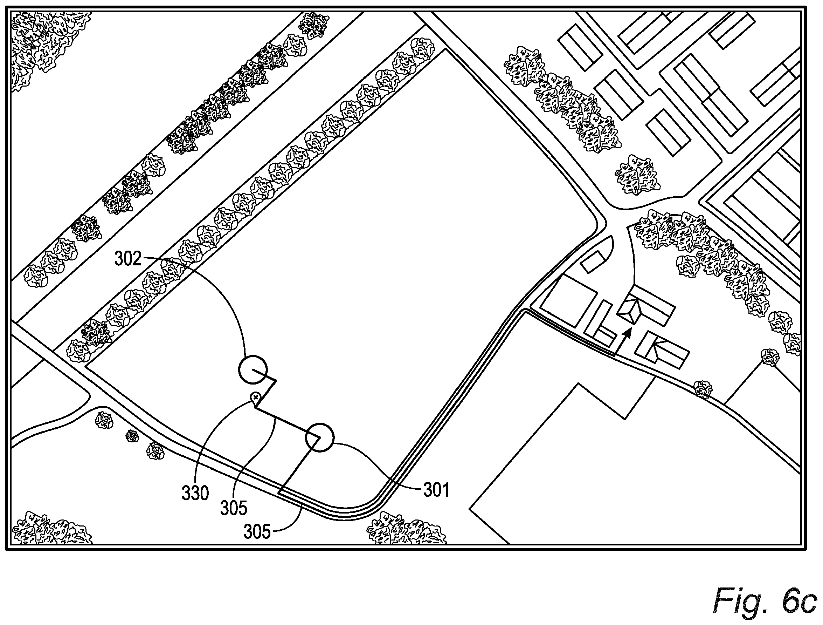

Figures 6a to 6c show a further embodiment wherein the method further comprises determining at least one first measurement region 301 and at least one second measurement region 302. Following the different embodiments of the present disclosure, the at least one first measurement region 301 may represent the most delayed senescence area of the agricultural field and the at least one second measurement region may represent the area of earliest senescence as determined above. In this embodiment, the system may be configured to display, by means of the Graphical User Interface both first and second measurement regions simultaneously, as shown in Figure 6a, allowing the farmer a broader choice, or following the embodiment of Figure 6b, may only display at least one of the first measurement regions, wherein the farmers may select at least one of them by means of the input unit, being the system configured to display at least one second measurement region which is located within a predetermined threshold of said selected at least on first measurement region. Analogously as in the previous embodiment displayed in Figures 5a and 5b, the system may be configured to display scheduled tasks 330 and itineraries or routes 305 which indicate the farmers as to how to best reach the at least one first and at least one second measurement regions.

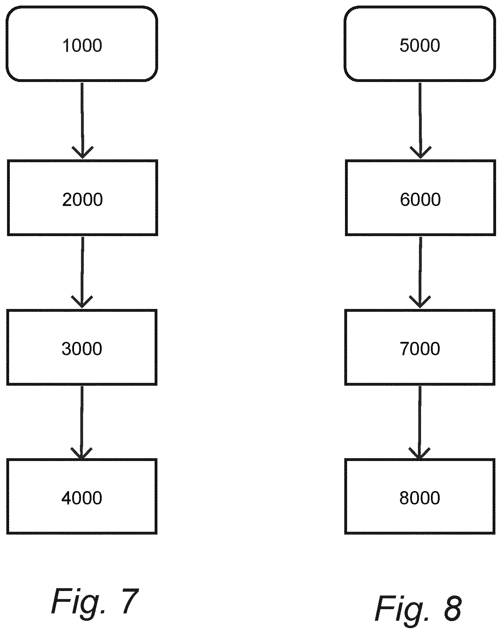

Figure 7 shows a workflow of the main embodiment of the present disclosure. Although the process steps, method steps, algorithms or the like may be described in a sequential order, such processes, methods and algorithms may be configured to work in alternate orders. In other words, any sequence or order of steps that may be described does not necessarily indicate a requirement that the steps be performed in that order. The steps of processes described herein may be performed in any order practical. Further, some steps may be performed simultaneously, in parallel, or concurrently. Various methods described herein may be practiced by combining one or more machine-readable storage media containing the code according to the present disclosure with appropriate standard computer hardware to execute the code contained therein. An apparatus for practicing various embodiments of the present disclosure may involve one or more computers (or one or more processors within a single computer) and storage systems containing or having network access to computer program(s) coded in accordance with various methods described herein, and the method steps of the disclosure could be accomplished by modules, routines, subroutines, or subparts of a computer program product. While the foregoing describes various embodiments of the disclosure, other and further embodiments of the disclosure may be devised without departing from the basic scope thereof. The scope of the disclosure is determined by the claims that follow. The disclosure is not limited to the described embodiments, versions or examples, which are included to enable a person having ordinary skill in the art to make and use the disclosure when combined with information and knowledge available to the person having ordinary skill in the art.

While the present disclosure has been illustrated by a description of various embodiments and while these embodiments have been described in considerable detail, it is not the intention of the applicant to restrict or in any way limit the scope of the appended claims to such detail. Additional advantages and modifications will readily appear to those skilled in the art. The disclosure in its broader aspects is therefore not limited to the specific details, representative apparatus and method, and illustrative example shown and described.

Accordingly, the detailed description thereof should not be construed as restrictive in all aspects but considered as illustrative. The scope of the disclosure should be determined by reasonable interpretation of the appended claims and all changes that come within the equivalent scope are included in the scope of the current disclosure.

### List of Reference Signs

- 10: Crop grain or pulses
- 20: Agricultural field
- 30: Farmers location
- 40: Farmers location icon
- 100: System
- 110: Crop grain moisture measurement device
- 112: Sensing chamber
- 113: Threaded bolt
- 120: Communication unit
- 130: Display unit
- 135: Touch sensitive display
- 140: Input unit
- 150: Location unit
- 160: System Processor
- 165: Memory Unit
- 170: Crop/Farm sensors
- 180: Weather station
- 200: Agricultural apparatus
- 210: Remote farm office
- 250: Remote imaging satellite
- 260: Manned or unmanned imaging aerial vehicles
- 300: Measurement regions
- 301: First Measurement regions
- 302: Second Measurement regions
- 330: Scheduled tasks
- 350: Earliest senescence areas
- 360: Most delayed senescence areas

## Claims

1. A computer implemented method for determining at least one measurement region for a grain or pulses moisture measurement device for determining a crop grain moisture level in an agricultural field, wherein the method comprises:
- determining an agricultural field;
- receiving field data from the agricultural field;
- determining at least one measurement region in the agricultural field for a grain or pulses moisture measurement device for determining a crop grain moisture level, wherein the at least one measurement region is determined based on the field data.

2. A method according to claim 1, wherein the method further comprises:
- receiving remote image data of the agricultural field;
- processing the remote image data to obtain a crop and/or soil status;
- determining the at least one measurement region further based on the obtained crop and/or soil status.

3. A method according to any one of the preceding claims, wherein determining at least one measurement region comprises determining at least one first and at least one second measurement region.

4. A method according to any of the preceding claims, wherein determining at least one measurement region comprises determining the areas with most delayed senescence and/or earliest senescence and determining the at least one measurement region based on at least one of the areas with most delayed senescence and/or with the earliest senescence.

5. A method according to claim 4, wherein determining the areas with the most delayed or earliest senescence comprises:
- receiving historic remote image data;
- processing the historic remote image data to determine the areas of most delayed or earliest senescence.

6. A method according to any one of the preceding claims, wherein the method further includes receiving at least one measurement of the crop grain or pulses moisture in at least one of the measurement regions and determining at least one of an expected average, maximum and minimum crop grain moisture level of the crop based on the at least one received measurement.

7. A method according to claim 6, wherein the method further includes determining an expected harvesting window based on the at least one of the determined expected average, maximum and/or minimum crop grain moisture level.

8. A method according to claim 7, wherein the method further comprises scheduling a harvesting operation based on the expected harvesting window.

9. A computer implemented method for determining a crop grain moisture level in an agricultural field, wherein the method comprises:
- determining an agricultural field;
- receiving field data from the agricultural field;
- receiving at least one measurement of the crop grain moisture in a location of the agricultural field;
- determining the crop grain moisture level in the agricultural field based on the at least one measurement, the measurement location and the field data.

10. A method according to claim 9, wherein the method further comprises:
- receiving remote image data of the agricultural field;
- determining the crop grain moisture level in the agricultural field further based on the remote image data.

11. A method according to claims 9 or 10, wherein determining a crop grain moisture level in an agricultural field further comprises:
- receiving historic remote image data of the agricultural field,
- processing the historic remote image data to determine the senescence degree of the measurement location,
- further determining the crop grain moisture level based on the senescence degree of the measurement location.

12. A method according to any one of the preceding claims, wherein the method further includes determining an expected harvesting window based on the crop grain moisture level.

13. A system for determining at least one measurement region for determining at least one measurement for a grain or pulses moisture detection device for determining a crop grain moisture level, configured to carry out the method according to any one of the claims 1 to 8 and/or 9 to 12.

14. A computer-readable storage medium comprising instructions which, when executed by a computer system, cause the computer to carry out the method of any one of the claims 1 to 8 and/or 9 to 12.

15. A computer program product comprising instructions which, when the program is executed by a computer system, cause the computer to carry out the method of any one of the claims 1 to 8 and/or 9 to 12.
